# EUROPEAN PATENT APPLICATION

(11) **EP 4 220 759 A1**
(43) Date of publication of application: **02.08.2023**
(21) Application number: 22827040.1
(22) Date of filing: 04.03.2022
(51) Int. Cl.: H01M 4/134, H01M 4/36, H01M 4/40, H01M 4/58, H01M 4/60

(54) **LITHIUM METAL NEGATIVE ELECTRODE PLATE, ELECTROCHEMICAL APPARATUS, AND ELECTRONIC DEVICE**

(30) Priority: 26.06.2021 CN 202110741456
(71) Applicant: Contemporary Amperex Technology Co., Limited, Ningde, Fujian 352100 (CN)
(72) Inventor: ZENG, Yuqun, Ningde, Fujian 352100 (CN)
(74) Representative: Gong, Jinping
(86) International application number: PCT/CN2022/079252
(87) International publication number: WO 2022/267535

(57) **Abstract**

This application provides a lithium metal negative electrode plate, an electrochemical apparatus, and an electronic device. The lithium metal negative electrode plate includes: copper foil; an active substance layer formed on at least part of a surface of the copper foil, where the active substance layer includes a lithium metal alloy; and a composite protection layer formed on at least part of a surface of the active substance layer, where thickness of the composite protection layer is less than or equal to 10 µm, and the composite protection layer includes a lithium fluoride inorganic layer and a polymer organic layer. The lithium metal negative electrode plate, the electrochemical apparatus, and the electronic device provided in this application can effectively reduce side reactions with lithium metal and improve first-cycle coulombic efficiency and cycling performance of a battery.

## Description

### CROSS-REFERENCE TO RELATED APPLICATIONS

This application claims priority to Chinese Patent Application No. 202110741456.3, filed on June 26, 2021 and entitled "LITHIUM METAL NEGATIVE ELECTRODE PLATE, ELECTROCHEMICAL APPARATUS, AND ELECTRONIC DEVICE", which is incorporated herein by reference in its entirety.

### TECHNICAL FIELD

This application pertains to the field of energy storage technologies, and specifically, relates to a lithium metal negative electrode plate, an electrochemical apparatus, and an electronic device.

### BACKGROUND

With increasingly prominent energy and environmental issues, the new energy industry has received growing attention. Secondary batteries have been widely used as important new energy storage apparatuses in recent years by virtue of their features such as high energy density and good cycling performance. Currently, negative electrode active materials of commercialized secondary batteries are mainly graphite. Due to a low theoretical lithiation capacity, only 372 mAh/g, of graphite itself, with only design structure and manufacturing processes of the batteries improved, it is difficult to increase energy density, which limits this application of the batteries in the fields needing high energy output. Therefore, a negative electrode active material with higher specific energy is needed.

Lithium metal negative electrodes have been considered as a final solution of negative electrodes of lithium-ion batteries due to advantages such as high theoretical capacity (3860 mAh/g), low electrochemical potential (-3.040 V vs. SHE), and high electrochemical reversible capacity. However, the problems of large volume swelling and growth of lithium dendrites of the lithium metal negative electrodes produced during charging and discharging cause their serious shortcomings in cycle life and safety, and thus commercial application cannot be really achieved. To alleviate the foregoing problems, solid-state electrolytes are generally used to replace existing liquid-state electrolytes in the industry to greatly reduce side reactions with lithium metal, thereby prolonging life and improving safety performance. However, intrinsic problems of the solid-state electrolyte such as low conductivity and low interface bonding strength still cannot be effectively resolved.

Therefore, currently, how side reactions with lithium metal are reduced to improve first-cycle coulombic efficiency and cycling performance of batteries is a problem to be resolved urgently.

### SUMMARY

This application provides a lithium metal negative electrode plate, an electrochemical apparatus, and an electronic device, which can effectively reduce side reactions with lithium metal to improve first-cycle coulombic efficiency and cycling performance of a battery.

A first aspect of this application provides a lithium metal negative electrode plate. The lithium metal negative electrode plate includes: copper foil; an active substance layer formed on at least part of a surface of the copper foil, where the active substance layer includes a lithium metal alloy; and a composite protection layer formed on at least part of a surface of the active substance layer, where thickness of the composite protection layer is less than or equal to 10 µm, and the composite protection layer includes a lithium fluoride inorganic layer and a polymer organic layer.

In any embodiment of this application, the lithium metal negative electrode plate satisfies at least one of the following conditions:
(1) the thickness of the composite protection layer is 0.3 µm to 10 µm; and
(2) the thickness of the composite protection layer is 1 µm to 7 µm.

In any embodiment of this application, the lithium metal negative electrode plate satisfies at least one of the following conditions:
(3) a mass ratio of the lithium fluoride inorganic layer and the polymer organic layer is 1:10 to 10: 1; and
(4) a mass ratio of the lithium fluoride inorganic layer and the polymer organic layer is 1:5 to 5:1.

In any embodiment of this application, the polymer organic layer includes at least one of polydimethylsiloxane, polyacrylonitrile, polypyrrole, polyimide, polyacrylic acid, and polymethyl methacrylate.

In any embodiment of this application, the lithium fluoride inorganic layer is formed through in-situ reaction between polyvinylidene fluoride and the lithium metal alloy.

In any embodiment of this application, the lithium metal negative electrode plate satisfies at least one of the following conditions:
(5) a chemical formula of the lithium metal alloy is LiR, where metal R is selected from at least one of Ag, Mo, In, Ge, Bi, and Zn;
(6) a chemical formula of the lithium metal alloy is LiR, where a mass percentage of element R in the lithium metal alloy is 1% to 10%; and
(7) the lithium metal alloy is a solid solution alloy.

A second aspect of this application provides an electrochemical apparatus, including a positive electrode plate, a negative electrode plate, a separator, and an electrolyte, where the negative electrode plate is the negative electrode plate according to the first aspect.

In any embodiment of this application, the electrochemical apparatus includes a positive electrode plate, a negative electrode plate, a separator, and an electrolyte, where the electrolyte includes a solvent and a lithium salt, and the electrolyte satisfies at least one of the following conditions:
(9) the lithium salt includes at least one of lithium hexafluorophosphate, lithium tetrafluoroborate, lithium difluorophosphate, lithium bis(trifluoromethanesulfonyl)imide, lithium bis(fluorosulfonyl)imide, lithium bis(oxalato)borate, or lithium difluoro(oxalato)borate;
(10) the solvent includes ethylene glycol dimethyl ether and 1,3-dioxolane;
(11) the solvent includes ethylene glycol dimethyl ether and 1,3-dioxolane, where a volume ratio of the ethylene glycol dimethyl ether and the 1,3-dioxolane is (0.5-10): 1; and
(12) a concentration of the electrolyte is 0.5 mol/L to 7 mol/L.

In any embodiment of this application, the electrolyte satisfies at least one of the following conditions:
(13) the electrolyte further includes an additive, where the additive includes at least one of trioxymethylene, lithium nitrate, dioxane, lithium fluorosulfonate, and fluoroethylene carbonate; and
(14) the electrolyte further includes an additive, where a mass percentage of the additive in the electrolyte is 0.1% to 10%.

A third aspect of this application provides an electronic device, and the electronic device includes the electrochemical apparatus according to the second aspect.

According to the lithium metal negative electrode plate, the electrochemical apparatus, and the electronic device provided in this application, on the lithium metal negative electrode plate, the active substance layer including the lithium metal alloy is formed on the surface of the copper foil, where the lithium metal alloy may undergo a phase change through its own alloy phase during lithium intercalation and deintercalation, so that lithium ions grow along the alloy phase toward the copper foil rather than toward the separator during intercalation to form lithium dendrites, thereby effectively suppressing growth of the lithium dendrites. The lithium fluoride inorganic layer and the polymer organic layer in the composite protection layer on a surface of the lithium metal alloy have a structure similar to that of a solid-state electrolyte membrane, which can effectively prevent the electrolyte from being in direct contact with lithium metal, increase a polarization degree on a surface of the lithium metal, and reduce side reactions with the lithium metal, thereby improving first-cycle coulombic efficiency and cycling performance of a battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skills in the art may still derive other drawings from the accompanying drawings without creative efforts.

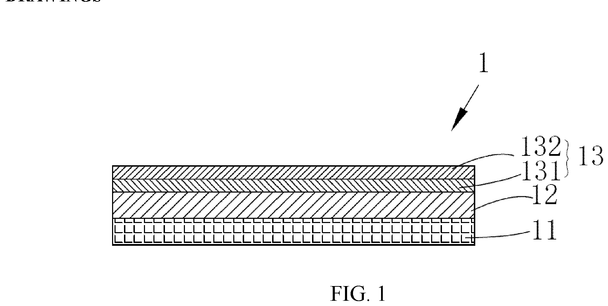

FIG. 1 is a schematic structural diagram of a lithium metal negative electrode plate according to an embodiment of this application.

### DESCRIPTION OF EMBODIMENTS

To make the invention objectives, technical solutions, and beneficial technical effects of this application clearer, this application is further described below in detail with reference to embodiments. It should be understood that the embodiments described in this specification are merely intended to interpret this application, but not intended to limit this application.

For simplicity, only some numerical ranges are explicitly disclosed in this specification. However, any lower limit may be combined with any upper limit to form a range not explicitly recorded; any lower limit may be combined with another lower limit to form a range not explicitly recorded; and any upper limit may be combined with any other upper limit to form a range not explicitly recorded. In addition, although not explicitly recorded, each point or individual value between endpoints of a range is included in the range. Therefore, each point or individual value may be used as its own lower limit or upper limit to be combined with any other point or individual value or combined with any other lower limit or upper limit to form a range not explicitly recorded.

In the descriptions of this specification, it should be noted that, unless otherwise stated, "more than" and "less than" are inclusive of the present number and that "more" in "one or more" means two or more than two.

In the descriptions of this specification, unless otherwise stated, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

It should be understood that relational terms such as "first" and "second" are used only to differentiate an entity or operation from another entity or operation, and do not necessarily require or imply that any actual relationship or sequence exists between these entities or operations.

The foregoing invention content of this application is not intended to describe each of the disclosed embodiments or implementations of this application. The following description illustrates exemplary embodiments in more detail by using examples. Throughout this application, guidance is provided by using a series of embodiments, and these embodiments may be used in various combinations. In the examples, enumeration is merely representative and should not be interpreted as exhaustive.

### First aspect

This application provides a lithium metal negative electrode plate. FIG. 1 is a schematic structural diagram of a lithium metal negative electrode plate 1 according to an embodiment of this application. As shown in FIG. 1, the lithium metal negative electrode plate 1 includes: copper foil 11; an active substance layer 12 formed on at least part of a surface of the copper foil 11, where the active substance layer 12 includes a lithium metal alloy; and
a composite protection layer 13 formed on at least part of a surface of the active substance layer 12, where thickness of the composite protection layer 13 is less than or equal to 10 µm, and the composite protection layer 13 includes a lithium fluoride inorganic layer 131 and a polymer organic layer 132.

In the foregoing solution, on the lithium metal negative electrode plate, the active substance layer including the lithium metal alloy is formed on the surface of the copper foil, where the lithium metal alloy may undergo a phase change through its own alloy phase during lithium intercalation and deintercalation, so that lithium ions grow along the alloy phase toward the copper foil rather than toward a separator during intercalation to form lithium dendrites, thereby effectively suppressing growth of the lithium dendrites. The lithium fluoride inorganic layer and the polymer organic layer in the composite protection layer on a surface of the lithium metal alloy have a structure similar to that of a solid-state electrolyte membrane, which can effectively prevent an electrolyte from being in direct contact with lithium metal, increase a polarization degree on a surface of the lithium metal, and reduce side reactions with the lithium metal, thereby improving first-cycle coulombic efficiency and cycling performance of a battery.

In an optional technical solution in this application, the lithium metal alloy is a solid solution alloy. It can be understood that a solid solution alloy phase of the lithium metal alloy provides a higher lithium atom diffusion coefficient than the lithium metal. During lithium intercalation, lithium atoms generated on an interface between the lithium metal alloy and the electrolyte diffuse into the electrode plate to form lithium alloy. However, during lithium deintercalation, lithium atoms generated by dealloying can be quickly released within a discharging time, thereby improving first-cycle charge-discharge coulombic efficiency of the battery.

The lithium metal alloy has a solid solution alloy phase. The lithium metal alloy may undergo a phase change through its own solid solution alloy phase during lithium intercalation and deintercalation, so that released lithium atoms can penetrate into the lithium metal alloy to form an alloy phase rather than deposit on a surface of the negative electrode plate to form metal lithium, meaning that lithium atoms grow along the alloy phase into the lithium metal alloy during intercalation, thereby suppressing the growth of the lithium dendrites.

In an optional technical solution in this application, a chemical formula of the lithium metal alloy is LiR, where metal R is selected from at least one of Ag, Mo, In, Ge, Bi, and Zn. Specifically, a mass percentage of element R in the lithium metal alloy is 1% to 10%, and specifically, may be 1%, 2%, 3%, 4%, 5%, 6%, 7%, 8%, or 10%, or certainly may be other values within the foregoing range, which is not limited herein. When the mass percentage of element R in the lithium metal alloy is excessively high, a percentage of lithium in the lithium metal alloy is reduced, which affects kinetic performance of the battery, causing a decrease in energy density and rate performance of the battery. When the mass percentage of element R in the lithium metal alloy is excessively low, a percentage of the solid solution alloy in the lithium metal alloy is reduced, so that the growth of the lithium dendrites cannot be suppressed through the solid solution alloy phase change. Preferably, the mass percentage of element R in the lithium metal alloy is 3% to 7%.

In an optional technical solution in this application, the thickness of the composite protection layer 13 is 0.3 µm to 10 µm, and specifically, may be 0.3 µm, 0.5 µm, 1.0 µm, 1.4 µm, 1.8 µm, 2.2 µm, 3.5 µm, 4.0 µm, 4.5 µm, 4.9 µm, 5.5 µm, 6.0 µm, 7.0 µm, 8.0 µm, 9.2 µm, or 10 µm, or certainly may be other values within the foregoing range, which is not limited herein. When the composite protection layer 13 is excessively thick, the energy density of the battery is decreased. When the composite protection layer 13 is excessively thin, mechanical strength of the composite protection layer is decreased, and coverage and protection of the composite protection layer on the lithium metal alloy is decreased, so that the lithium dendrites are prone to grow toward the separator, thereby deteriorating the cycling performance of the battery. Preferably, the thickness of the composite protection layer 13 is 1 µm to 7 µm, and more preferably, the thickness of the composite protection layer 13 is 3 µm to 5 µm.

In an optional technical solution in this application, the composite protection layer 13 includes the lithium fluoride inorganic layer 131 and the polymer organic layer 132.

The lithium fluoride inorganic layer is formed through in-situ reaction between polyvinylidene fluoride and the lithium metal alloy. Lithium fluoride, with good ionic conductivity, mechanical performance, and electrochemical stability, may be one of components of the solid-state electrolyte membrane. Lithium fluoride being used in combination with a polymer can produce an effect similar to the solid-state electrolyte membrane, inhibiting side reactions between the lithium metal and the electrolyte, thereby improving stability of the lithium metal alloy and the electrolyte. In this embodiment, lithium fluoride and the lithium metal are bonded by covalent bonds, so that bonding stability of lithium fluoride and the lithium metal alloy is enhanced, and the coating layer on the surface of the copper foil is not prone to fall off during cycling. During preparation, the copper foil with the lithium metal alloy may react in-situ with polyvinylidene fluoride to form the lithium fluoride inorganic layer. The lithium fluoride inorganic layer can improve conductivity for lithium-ion diffusion and suppress the formation and growth of the lithium dendrites.

Specifically, thickness of the lithium fluoride inorganic layer may be 0.1 µm to 2 µm, and specifically, may be 0.1 µm, 0.2 µm, 0.5 µm, 0.8 µm, 1.0 µm, 1.2 µm, 1.5 µm, 1.8 µm, or 2.0 µm, or certainly may be other values within the foregoing range, which is not limited herein. The thickness of the lithium fluoride inorganic layer may be controlled according to a reaction time. When the lithium fluoride inorganic layer is excessively thick, the electrode plate is prone to crack during cycling, thereby affecting electrochemical performance. When the lithium fluoride inorganic layer is excessively thin, electrochemical stability and ionic conductivity of the composite protection layer 13 are decreased, and the cycling performance of the battery is decreased.

The polymer organic layer, with high viscosity and mechanical strength, can guide homogeneous nucleation of lithium. The polymer organic layer being used in combination with the lithium fluoride inorganic layer can make the composite protection layer have both high mechanical strength and ionic conductivity to coat the lithium metal alloy, improving integrity of a contact interface between the lithium metal alloy and the copper foil, thereby inhibiting side reactions caused by direct contact between the lithium metal and the electrolyte and suppressing the growth of the lithium dendrites. Specifically, the polymer organic layer may be formed on a surface of the lithium fluoride inorganic layer through processes such as spraying, coating, and deposition.

In an optional technical solution in this application, thickness of the polymer organic layer may be 0.2 µm to 2 µm, and specifically, may be 0.2 µm, 0.5 µm, 0.8 µm, 1.0 µm, 1.2 µm, 1.5 µm, 1.8 µm, or 2.0 µm, or certainly may be other values within the foregoing range, which is not limited herein. When the polymer organic layer is excessively thick, the energy density of the battery is decreased. When the polymer organic layer is excessively thin, integrity, mechanical strength, and elasticity of the composite protection layer are decreased, and the electrode plate is prone to crack during cycling, thereby affecting the electrochemical performance.

In an optional technical solution in this application, the polymer organic layer includes at least one of polydimethylsiloxane (PDMS), polyacrylonitrile (PAN), polypyrrole (PPy), polyimide (PI), polyacrylic acid (PAA), and polymethyl methacrylate (PMMA).

In an optional technical solution in this application, a mass ratio of the lithium fluoride inorganic layer and the polymer organic layer is 1:10 to 10:1, and specifically, may be 1:10, 2:10, 3:10, 4:10, 5:10, 8:10, 10:10, 10:8, 10:5, 10:3, or 10:1, or certainly may be other values within the foregoing range, which is not limited herein. When a percentage of the lithium fluoride inorganic layer in the composite protection layer is excessively high, a percentage of the polymer organic layer in the composite protection layer is decreased, and the integrity, mechanical strength, and elasticity of the composite protection layer are decreased, so that the electrode plate is prone to crack during cycling, thereby affecting the electrochemical performance. When the percentage of the lithium fluoride inorganic layer in the composite protection layer is excessively low, the electrochemical stability and ionic conductivity of the composite protection layer are decreased, thereby deteriorating the cycling performance of the battery. Preferably, the mass ratio of the lithium fluoride inorganic layer and the polymer organic layer is 1:5 to 5: 1.

In an optional technical solution in this application, a preparation method of the lithium metal negative electrode plate includes the following steps.

In an Ar atmosphere, lithium metal is put into a stainless crucible and heated to 280°C to 350°C to be completely melted, and then alloy component powder is added into the liquid lithium metal and fully stirred for 2 h to 6 h to ensure that the metal powder is uniformly mixed with the lithium metal liquid. After cooling, a lithium metal alloy active substance is obtained.

The lithium metal alloy active substance is compounded on a surface of copper foil through cold pressing to obtain an electrode plate.

The electrode plate is placed in a solution containing polyvinylidene fluoride, so that the lithium metal reacts in-situ with polyvinylidene fluoride to form a lithium fluoride inorganic layer.

After the electrode plate containing the lithium fluoride inorganic layer is dried in vacuum at 60°C to 100°C, an organic slurry containing a polymer is sprayed onto a surface of the lithium fluoride inorganic layer, and then the electrode plate is dried again in vacuum at 60°C to 100°C, to obtain the lithium metal negative electrode plate.

### Second aspect

This application provides an electrochemical apparatus, including a positive electrode plate, a negative electrode plate, and an electrolyte, where the negative electrode plate is the lithium metal negative electrode plate according to the first aspect.

The positive electrode plate includes a positive electrode current collector and a positive electrode active substance layer formed on at least part of a surface of the positive electrode current collector, where the positive electrode active substance layer includes a positive electrode active material.

In an optional technical solution in this application, the positive electrode active material may be selected from lithium cobalt oxide, lithium nickel oxide, lithium manganese oxide, lithium nickel manganese oxide, lithium nickel cobalt manganese oxide, lithium nickel cobalt aluminum oxide, and olivine-structured lithium-containing phosphate. However, this application is not limited to these materials, and may alternatively use other conventional well-known materials that can be used as positive electrode active materials for lithium-ion batteries. Specifically, the positive electrode active material includes at least one of lithium cobalt oxide, lithium nickel cobalt manganate, lithium nickel cobalt aluminate, lithium manganate, lithium manganese iron phosphate, lithium vanadium phosphate, lithium vanadyl phosphate, lithium iron phosphate, and lithium titanate.

In an optional technical solution in this application, the positive electrode active substance layer may further include a positive electrode conductive material, thereby imparting conductive performance to the electrode. The positive electrode conductive material may include any conductive material, provided that the conductive material does not cause a chemical change. Non-limiting examples of the positive electrode conductive material include a carbon-based material (for example, natural graphite, artificial graphite, carbon black, acetylene black, Ketjen black, and carbon fibers), a metal-based material (for example, metal powder and metal fibers, including copper, nickel, aluminum, and silver), a conductive polymer (for example, a polyphenylene derivative), and a mixture thereof.

In an optional technical solution in this application, the positive electrode active substance layer may further include a binder to firmly bind a positive electrode active substance and an optional conductive agent on the positive electrode current collector. The binder is not limited to any specific type in this application, and may be selected according to actual needs. In an example, the binder may be at least one of polyvinylidene fluoride (PVDF), polytetrafluoroethylene (PTFE), polyacrylic acid (PAA), polyvinyl alcohol (PVA), ethylene vinyl acetate (EVA), styrene-butadiene rubber (SBR), carboxymethyl cellulose (CMC), sodium alginate (SA), polymethacrylic acid (PMA), and carboxymethyl chitosan (CMCS).

In an optional technical solution in this application, the positive electrode current collector may be made of a conductive carbon sheet, metal foil, carbon-coated metal foil, or a porous metal plate. A conductive carbon material of the conductive carbon sheet may be one or more of superconducting carbon, acetylene black, carbon black, Ketjen black, carbon dots, carbon nanotubes, graphite, graphene, and carbon nanofibers. Metal materials of the metal foil, the carbon-coated metal foil, and the porous metal plate may be each independently selected from at least one of copper, aluminum, nickel, and stainless steel.

A positive electrode current collector 11 is made of, for example, one or more of copper foil, aluminum foil, nickel foil, stainless steel foil, a stainless steel mesh, and carbon-coated aluminum foil, and preferably, aluminum foil.

The positive electrode plate may be prepared by using a conventional method in the art. Generally, the positive electrode active substance and the optional conductive agent and binder are dissolved in a solvent (for example, N-methylpyrrolidone, NMP for short) to form a uniform positive electrode slurry, and the positive electrode slurry is applied onto the positive electrode current collector, followed by drying and cold pressing, to obtain the positive electrode plate.

A separator in the electrochemical apparatus of this application may be made of various materials suitable for separators of electrochemical energy storage apparatuses in the art, for example, may include but is not limited to at least one of polyethylene, polypropylene, polyvinylidene fluoride, aramid, polyethylene terephthalate, polytetrafluoroethylene, polyacrylonitrile, polyimide, polyamide, polyester, and natural fibers.

The electrolyte in the electrochemical apparatus of this application includes a solvent, a lithium salt, and an additive.

The lithium salt in the electrolyte is selected from at least one of an organic lithium salt or an inorganic lithium salt. Specifically, the lithium salt may be selected from at least one of lithium hexafluorophosphate (LiPF₆), lithium tetrafluoroborate, lithium difluorophosphate, lithium bis(trifluoromethanesulfonyl)imide LiN(CF₃SO₂)₂ (LiTFSI for short), lithium bis(fluorosulfonyl)imide Li(N(SO₂F)₂) (LiFSI for short), lithium bis(oxalato)borate LiB(C₂O₄)₂ (LiBOB for short), and lithium difluoro(oxalato)borate LiBF₂(C₂O₄) (LiDFOB for short).

In an optional technical solution in this application, the solvent in the electrolyte includes ethylene glycol dimethyl ether (DME for short) and 1,3-dioxolane (DOL for short). A volume ratio of the ethylene glycol dimethyl ether and the 1,3-dioxolane is (0.5-10):1, and specifically, may be 0.5:1, 0.8:1, 1:1, 1.5:1, 1.8:1, 2.5:1, 3:1, 5:1, 6:1, 7:1, 8:1, 9:1, or 10:1, or certainly may be other values within the foregoing range, which is not limited herein. When the ratio of the ethylene glycol dimethyl ether and the 1,3-dioxolane is excessively large, meaning that a percentage of the ethylene glycol dimethyl ether is excessively high and a percentage of the 1,3-dioxolane is excessively low, it is difficult to form a stable solid-state electrolyte membrane by exploiting synergy between the 1,3-dioxolane and the ethylene glycol dimethyl ether. When the ratio of the ethylene glycol dimethyl ether and the 1,3-dioxolane is excessively small, meaning that a percentage of the 1,3-dioxolane is excessively high, the 1,3-dioxolane is prone to undergo a self-polymerization reaction, and it is difficult to form an effective solid-state electrolyte membrane, resulting in lithium precipitation of the battery. Preferably, the volume ratio of the ethylene glycol dimethyl ether and the 1,3-dioxolane is (1-7):1. It should noted that mixing the foregoing two solvents helps the electrolyte form a more stable solid-state electrolyte membrane on a surface of the electrode plate, and reduces side reactions, thereby suppressing the growth of the lithium dendrites.

In an optional technical solution in this application, a concentration of the electrolyte is 0.5 mol/L to 7 mol/L, and specifically, may be 0.5 mol/L, 0.8 mol/L, 1 mol/L, 1.5 mol/L, 2.0 mol/L, 3 mol/L, 4 mol/L, 5 mol/L, 6 mol/L, or 7 mol/L, or certainly may be other values within the foregoing range, which is not limited herein. When the concentration of the electrolyte is excessively high, viscosity of the electrolyte is excessively high, which affects processability and kinetic performance of the battery. When the concentration of the electrolyte is excessively low, a concentration of the lithium salt is excessively low, which aggravates concentration polarization during cycling, and promotes the growth of the lithium dendrites, thereby decreasing the cycling performance of the battery. Preferably, the concentration of the electrolyte is 2 mol/L to 5 mol/L. It can be understood that the use of the electrolyte within the foregoing concentration range can increase a concentration of lithium ions on an interface between the lithium metal and the electrolyte, minimizing the concentration polarization, thereby alleviating polarization growth of the lithium dendrites caused.

In an optional technical solution in this application, the electrolyte further includes an additive, where the additive includes at least one of trioxymethylene, lithium nitrate, dioxane, lithium fluorosulfonate, and fluoroethylene carbonate.

In an optional technical solution in this application, a mass percentage of the additive in the electrolyte is 0.1% to 10%, and specifically, may be 0.1%, 0.5%, 1%, 1.5%, 2%, 2.5%, 3%, 3.5%, 4%, 5%, 6%, 7%, 8%, 9%, or 10%, or certainly may be other values within the foregoing range, which is not limited herein. When the mass percentage of the additive in the electrolyte is excessively high, a large number of active lithium ions are consumed during cycling of the battery, which affects quality of the solid-state electrolyte membrane, thereby shortening life of the battery. When the mass percentage of the additive in the electrolyte is excessively low, it is difficult to inhibit polymerization of the 1,3-dioxolane by virtue of chemical activity of the additive, resulting in serious lithium precipitation of the battery. Preferably, the mass percentage of the additive in the electrolyte is 0.5% to 5%.

In an optional technical solution in this application, the separator is selected from a combination of one or more of a polyethylene film, a polypropylene film, and a polyvinylidene fluoride film. Certainly, an inorganic or organic coating layer may alternatively be applied onto a surface of a separate substrate according to actual needs, so as to increase hardness of the cell or improve adhesion of the separator to cathode and negative electrode interfaces.

In an optional technical solution in this application, a preparation method of the electrochemical apparatus includes the following steps.

The positive electrode plate, the separator, and the negative electrode plate are stacked in sequence so that the separator is sandwiched between the positive electrode plate and the negative electrode plate for separation, to obtain a cell, or the resulting stack is wound to obtain a cell. The cell is placed in a packaging shell (may be a soft pack, a rectangular aluminum shell, a rectangular steel shell, a cylindrical aluminum shell, and a cylindrical steel shell), and the electrolyte is injected, followed by sealing, to obtain the electrochemical apparatus.

In a specific embodiment, the electrochemical apparatus is a lithium secondary battery, and the lithium secondary battery includes but is not limited to a lithium metal secondary battery, a lithium-ion secondary battery, a lithium polymer secondary battery, or a lithium-ion polymer secondary battery.

### Third aspect

This application further provides an electronic device, and the electronic device includes the electrochemical apparatus according to the second aspect. The electrochemical apparatus may be configured to provide power for the electronic device.

In an optional technical solution in this application, the electronic device includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

### Examples

Content disclosed in this application is described in more detail in the following examples. These examples are merely intended for illustrative purposes because various modifications and changes made without departing from the scope of the content disclosed in this application are apparent to a person skilled in the art. Unless otherwise stated, all parts, percentages, and ratios reported in the following examples are based on masses, all reagents used in the examples are commercially available or synthesized in a conventional manner, and can be used directly without further treatment, and all instruments used in the examples are commercially available.

### Example 1

### Preparation of positive electrode plate

A 10 wt% polyvinylidene fluoride binder was fully dissolved in N-methylpyrrolidone, and a 10 wt% carbon black conductive agent and an 80 wt% lithium iron phosphate positive electrode active material were added to prepare a uniformly dispersed positive electrode slurry. The positive electrode slurry was uniformly applied onto a surface of aluminum foil, and then the aluminum foil was fully dried in a vacuum drying oven. The obtained electrode plate was rolled and then punched out to obtain a target wafer.

### Preparation of negative electrode plate

In an Ar atmosphere, lithium metal was put into a stainless crucible and heated to 300°C to be completely melted, and then alloy component powder was added into the liquid lithium metal and fully stirred for 2 h to ensure that the metal powder was uniformly mixed with the lithium metal liquid. After cooling, a lithium metal alloy active substance was obtained.

The lithium metal alloy active substance was compounded on a surface of copper foil through cold pressing to obtain an electrode plate. The electrode plate was placed in a solution containing polyvinylidene fluoride, so that the lithium metal reacted in-situ with polyvinylidene fluoride to form a lithium fluoride inorganic layer. After the electrode plate containing the lithium fluoride inorganic layer was dried in vacuum at 80°C, an organic slurry containing a polymer was sprayed onto a surface of the lithium fluoride inorganic layer, and then the electrode plate was dried again in vacuum at 80°C, to obtain a lithium metal negative electrode plate.

### Separator

### A polyethylene (PE) porous polymer film was used.

### Preparation of electrolyte

A mixed solution of ethylene glycol dimethyl ether (DME) and 1,3-dioxolane (DOL) was used as an organic solvent, and then fully dried lithium hexafluorophosphate was dissolved in the mixed organic solvent to prepare an electrolyte.

### Preparation of button cell

The positive electrode plate, the separator, and the negative electrode plate were stacked in sequence so that the separator was sandwiched between the positive electrode plate and the negative electrode plate for separation, and the electrolyte was added, to assemble a button cell.

For Examples 1 to 36 and Comparative Examples 1 to 17 of the negative electrode plates prepared according to the foregoing preparation methods, specific parameters of the electrolyte formulations thereof are shown in Table 1.

**Table 1**

| Sample | Thickness of composite protection layer (µm) | Mass ratio of lithium fluoride inorganic layer and polymer organic layer (%) | Type of alloy component R | Mass percentage of element R in lithium metal alloy (%) | Concentration of electrolyte (mol/L) | Volume ratio of DME and DOL | Mass percentage of additive (%) | Type of additive |
|---|---|---|---|---|---|---|---|---|
| Example 1 | 0.3 | 1:1 | Mo | 4 | 4 | 4:1 | 0.5 | LiNO₃ |
| Example 2 | 1 | 1:1 | Mo | 4 | 4 | 4:1 | 0.5 | LiNO₃ |
| Example 3 | 3 | 1:1 | Mo | 4 | 4 | 4:1 | 0.5 | LiNO₃ |
| Example 4 | 5 | 1:1 | Mo | 4 | 4 | 4:1 | 0.5 | LiNO₃ |
| Example 5 | 7 | 1:1 | Mo | 4 | 4 | 4:1 | 0.5 | LiNO₃ |
| Example 6 | 10 | 1:1 | Mo | 4 | 4 | 4:1 | 0.5 | LiNO₃ |
| Example 7 | 3 | 1:10 | Mo | 4 | 4 | 4:1 | 0.5 | LiNO₃ |
| Example 8 | 3 | 1:5 | Mo | 4 | 4 | 4:1 | 0.5 | LiNO₃ |
| Example 9 | 3 | 1:2 | Mo | 4 | 4 | 4:1 | 0.5 | LiNO₃ |
| Example 10 | 3 | 5:1 | Mo | 4 | 4 | 4:1 | 0.5 | LiNO₃ |
| Example 11 | 3 | 10:1 | Mo | 4 | 4 | 4:1 | 0.5 | LiNO₃ |
| Example 12 | 3 | 1:1 | Ag | 4 | 4 | 4:1 | 0.5 | LiNO₃ |
| Example 13 | 3 | 1:1 | Ge | 4 | 4 | 4:1 | 0.5 | LiNO₃ |
| Example 14 | 3 | 1:1 | In | 4 | 4 | 4:1 | 0.5 | LiNO₃ |
| Example 15 | 3 | 1:1 | Zn | 4 | 4 | 4:1 | 0.5 | LiNO₃ |
| Example 16 | 3 | 1:1 | Bi | 4 | 4 | 4:1 | 0.5 | LiNO₃ |
| Example 17 | 3 | 1:1 | Mo | 1 | 4 | 4:1 | 0.5 | LiNO₃ |
| Example 18 | 3 | 1:1 | Mo | 3 | 4 | 4:1 | 0.5 | LiNO₃ |
| Example 19 | 3 | 1:1 | Mo | 5 | 4 | 4:1 | 0.5 | LiNO₃ |
| Example 20 | 3 | 1:1 | Mo | 7 | 4 | 4:1 | 0.5 | LiNO₃ |
| Example 21 | 3 | 1:1 | Mo | 10 | 4 | 4:1 | 0.5 | LiNO₃ |
| Example 22 | 3 | 1:1 | Mo | 4 | 0.5 | 4:1 | 0.5 | LiNO₃ |
| Example 23 | 3 | 1:1 | Mo | 4 | 2 | 4:1 | 0.5 | LiNO₃ |
| Example 24 | 3 | 1:1 | Mo | 4 | 5 | 4:1 | 0.5 | LiNO₃ |
| Example 25 | 3 | 1:1 | Mo | 4 | 7 | 4:1 | 0.5 | LiNO₃ |
| Example 26 | 3 | 1:1 | Mo | 4 | 4 | 1:2 | 0.5 | LiNO₃ |
| Example 27 | 3 | 1:1 | Mo | 4 | 4 | 1:1 | 0.5 | LiNO₃ |
| Example 28 | 3 | 1:1 | Mo | 4 | 4 | 5:1 | 0.5 | LiNO₃ |
| Example 29 | 3 | 1:1 | Mo | 4 | 4 | 7:1 | 0.5 | LiNO₃ |
| Example 30 | 3 | 1:1 | Mo | 4 | 4 | 10:1 | 0.5 | LiNO₃ |
| Example 31 | 3 | 1:1 | Mo | 4 | 4 | 4:1 | 0.1 | LiNO₃ |
| Example 32 | 3 | 1:1 | Mo | 4 | 4 | 4:1 | 2 | LiNO₃ |
| Example 33 | 3 | 1:1 | Mo | 4 | 4 | 4:1 | 5 | LiNO₃ |
| Example 34 | 3 | 1:1 | Mo | 4 | 4 | 4:1 | 10 | LiNO₃ |
| Example 35 | 3 | 1:1 | Mo | 4 | 4 | 4:1 | 0.5 | LiSO₃F |
| Example 36 | 3 | 1:1 | Mo | 4 | 4 | 4:1 | 0.5 | FEC |
| Comparative Example 1 | 11 | 1:1 | Mo | 4 | 4 | 4:1 | 0.5 | LiNO₃ |
| Comparative Example 2 | 0.1 | 1:1 | Mo | 4 | 4 | 4:1 | 0.5 | LiNO₃ |
| Comparative Example 3 | 3 | 15:1 | Mo | 4 | 4 | 4:1 | 0.5 | LiNO₃ |
| Comparative Example 4 | 3 | 1:15 | Mo | 4 | 4 | 4:1 | 0.5 | LiNO₃ |
| Comparative Example 5 | 3 | 1:0 | Mo | 4 | 4 | 4:1 | 0.5 | LiNO₃ |
| Comparative Example 6 | 3 | 0:1 | Mo | 4 | 4 | 4:1 | 0.5 | LiNO₃ |
| Comparative Example 7 | 3 | 1:1 | Mo | 0.5 | 4 | 4:1 | 0.5 | LiNO₃ |
| Comparative Example 8 | 3 | 1:1 | Mo | 12 | 4 | 4:1 | 0.5 | LiNO₃ |
| Comparative Example 9 | 3 | 1:1 | / | / | 4 | 4:1 | 0.5 | LiNO₃ |
| Comparative Example 10 | 3 | 1:1 | Mo | 4 | 0.2 | 4:1 | 0.5 | LiNO₃ |
| Comparative Example 11 | 3 | 1:1 | Mo | 4 | 8 | 4:1 | 0.5 | LiNO₃ |
| Comparative Example 12 | 3 | 1:1 | Mo | 4 | 4 | 1:3 | 0.5 | LiNO₃ |
| Comparative Example 13 | 3 | 1:1 | Mo | 4 | 4 | 11:1 | 0.5 | LiNO₃ |
| Comparative Example 14 | 3 | 1:1 | Mo | 4 | 4 | Carbonate | 0.5 | LiNO₃ |
| Comparative Example 15 | 3 | 1:1 | Mo | 4 | 4 | 4:1 | 0.05 | LiNO₃ |
| Comparative Example 16 | 3 | 1:1 | Mo | 4 | 4 | 4:1 | 11 | LiNO₃ |
| Comparative Example 17 | 3 | 1:1 | Mo | 4 | 4 | 4:1 | / | / |

| | | | | | | | | |
|---|---|---|---|---|---|---|---|---|
| "/" indicates that the percentage of the substance is 0. | | | | | | | | |

### Tests

### Performance parameter test of negative electrode plate

### (1) Thickness of composite protection layer

Sectional imaging was performed using a SEM on an electrode plate obtained by means of liquid nitrogen quenching cutting, and a thickness of a composite protection layer was measured in a secondary electron image.

### (2) Performance test of battery

At 25°C, the batteries prepared in the examples and comparative examples were charged to 4 V at 0.1C and then discharged to 1 V at 0.1C, and subjected to such full charge and full discharge cycles until capacities of the lithium-ion batteries were less than 80% of initial capacities. First-cycle coulombic efficiency and the number of cycles were recorded, and specific data thereof are shown in Table 2.

**Table 2**

| Sample | First-cycle coulombic efficiency | Cycles |
|---|---|---|
| Example 1 | 91 | 601 |
| Example 2 | 94 | 632 |
| Example 3 | 95 | 681 |
| Example 4 | 95 | 666 |
| Example 5 | 95 | 643 |
| Example 6 | 94 | 611 |
| Example 7 | 94 | 594 |
| Example 8 | 95 | 621 |
| Example 9 | 94 | 646 |
| Example 10 | 93 | 622 |
| Example 11 | 93 | 607 |
| Example 12 | 94 | 631 |
| Example 13 | 93 | 617 |
| Example 14 | 92 | 602 |
| Example 15 | 93 | 625 |
| Example 16 | 90 | 588 |
| Example 17 | 89 | 541 |
| Example 18 | 93 | 662 |
| Example 19 | 94 | 672 |
| Example 20 | 93 | 653 |
| Example 21 | 93 | 631 |
| Example 22 | 82 | 501 |
| Example 23 | 89 | 588 |
| Example 24 | 92 | 621 |
| Example 25 | 87 | 571 |
| Example 26 | 89 | 555 |
| Example 27 | 91 | 598 |
| Example 28 | 93 | 644 |
| Example 29 | 90 | 577 |
| Example 30 | 83 | 505 |
| Example 31 | 92 | 594 |
| Example 32 | 94 | 652 |
| Example 33 | 93 | 630 |
| Example 34 | 91 | 580 |
| Example 35 | 90 | 623 |
| Example 36 | 91 | 635 |
| Comparative Example 1 | 93 | 598 |
| Comparative Example 2 | 89 | 571 |
| Comparative Example 3 | 92 | 588 |
| Comparative Example 4 | 93 | 569 |
| Comparative Example 5 | 89 | 524 |
| Comparative Example 6 | 90 | 544 |
| Comparative Example 7 | 87 | 513 |
| Comparative Example 8 | 91 | 600 |
| Comparative Example 9 | 85 | 523 |
| Comparative Example 10 | 80 | 471 |
| Comparative Example 11 | 87 | 535 |
| Comparative Example 12 | 85 | 505 |
| Comparative Example 13 | 80 | 481 |
| Comparative Example 14 | 72 | 105 |
| Comparative Example 15 | 89 | 579 |
| Comparative Example 16 | 82 | 481 |
| Comparative Example 17 | 80 | 480 |

It can be learned from the test results of Examples 1 to 6 and Comparative Examples 1 and 2 that when the thickness of the composite protection layer on the surface of the electrode plate is 0.3 µm to 10 µm, the battery has high energy density, and the composite protection layer can suppress formation of lithium dendrites, thereby improving cycling performance of the battery. It can be learned from the test result of Comparative Example 1 that when the composite protection layer is excessively thick, energy density of the battery is decreased. It can be learned from the test result of Comparative Example 2 that when the composite protection layer is excessively thin, mechanical strength of the composite protection layer is decreased, and coverage and protection of the composite protection layer on the lithium metal alloy is decreased, so that the lithium dendrites are prone to grow toward the separator, thereby deteriorating the cycling performance of the battery. Preferably, the thickness of the composite protection layer is 1 µm to 7 µm.

It can be learned from the test results of Examples 7 to 11 and Comparative Examples 3 to 6 that when the mass ratio of the lithium fluoride inorganic layer and the polymer organic layer in the composite protection layer is controlled to be 1: 10 to 10:1, side reactions on the surface of the electrode plate during cycling are reduced, thereby improving the cycling performance of the battery. It can be learned from the test results of Comparative Examples 3 and 5 that when the percentage of the lithium fluoride inorganic layer in the composite protection layer is excessively high, meaning that the percentage of the polymer organic layer in the composite protection layer is decreased, or when the composite protection layer includes only the lithium fluoride inorganic layer, integrity, mechanical strength, and elasticity of the composite protection layer are decreased, so that the electrode plate is prone to crack during cycling, thereby affecting electrochemical performance. It can be learned from the test results of Comparative Examples 4 and 6 that when the percentage of the lithium fluoride inorganic layer in the composite protection layer is excessively low, or when the composite protection layer includes only the polymer organic layer, electrochemical stability and ionic conductivity of the composite protection layer are decreased, thereby deteriorating the cycling performance of the battery. Preferably, the mass ratio of the lithium fluoride inorganic layer and the polymer organic layer is 1:5 to 5:1.

It can be learned from the test results of Examples 3 and 12 to 16 that when the alloy element in the lithium metal alloy changes, it is difficult for part of the metal to form a solid solution with the lithium metal, so that the lithium dendrites grow outward to pierce the separator, thereby decreasing the cycling performance of the battery.

It can be learned from the test results of Examples 3 and 17 to 21 and Comparative Examples 7 and 8 that when the mass percentage of element R in the lithium metal alloy is 1% to 10%, lithiation overpotential can be effectively reduced, thereby suppressing the growth of the lithium dendrites. When the mass percentage of element R in the lithium metal alloy of Comparative Example 7 is excessively low, the percentage of the solid solution alloy in the lithium metal alloy is reduced, so that the growth of the lithium dendrites cannot be suppressed through the solid solution alloy phase change. When the mass percentage of element R in the lithium metal alloy of Comparative Example 8 is excessively high, the percentage of lithium in the lithium metal alloy is reduced, which affects kinetic performance of the battery, causing a decrease in the energy density and rate performance of the battery. Preferably, the mass percentage of element R in the lithium metal alloy is 3% to 7%.

It can be learned from the test results of Example 3 and Comparative Example 9 that the pure lithium metal instead of the lithium metal alloy is used on the surface of the copper foil of Comparative Example 9, and the lithium metal has no alloy phase, so that the growth of the lithium dendrites cannot be suppressed through the solid solution alloy phase change, thereby decreasing the cycling performance of the battery.

It can be learned from the test results of Examples 3 and 22 to 25 and Comparative Examples 10 and 11 that when the concentration of the electrolyte is 0.5 mol/L to 7 mol/L, the battery has good kinetic performance, thereby ensuring the cycling performance of the battery. It can be learned from the test result of Comparative Example 10 that when the concentration of the electrolyte is excessively low, the concentration of the lithium salt is excessively low, which aggravates concentration polarization during cycling, and promotes the growth of the lithium dendrites, thereby decreasing the cycling performance of the battery. It can be learned from the test result of Comparative Example 11 that when the concentration of the electrolyte is excessively high, viscosity of the electrolyte is excessively high, thereby decreasing the kinetic performance of the battery. Preferably, the concentration of the electrolyte is 2 mol/L to 5 mol/L.

It can be learned from the test results of Examples 3 and 26 to 30 and Comparative Examples 12 and 13 that when the volume ratio of DME and DOL is (0.5-10):1, the electrolyte can form a more stable solid-state electrolyte membrane on the surface of the lithium metal alloy, so that the side reactions are reduced, and the growth of the lithium dendrites is suppressed, helping improve the cycling performance of the battery. It can be learned from the test result of Comparative Example 12 that when the volume ratio of DME and DOL is excessively small, the percentage of the 1,3-dioxolane is excessively high, the 1,3-dioxolane is prone to undergo a self-polymerization reaction, and it is difficult to form an effect solid-state electrolyte membrane, resulting in lithium precipitation of the battery, thereby decreasing the cycling performance. It can be learned from the test result of Comparative Example 13 that when the volume ratio of DME and DOL is excessively large, meaning that the percentage of the ethylene glycol dimethyl ether is excessively high and the percentage of the 1,3-dioxolane is excessively low, it is difficult to form a stable solid-state electrolyte membrane by exploiting synergy between the 1,3-dioxolane and the ethylene glycol dimethyl ether, thereby decreasing the cycling performance of the battery. Preferably, the volume ratio of the ethylene glycol dimethyl ether and the 1,3-dioxolane is (1-7):1.

It can be learned from the test results of Example 3 and Comparative Example 14 that carbonate is used as the solvent of the electrolyte in Comparative Example 14, and carbonate cannot suppress the growth of the lithium dendrites, so that the battery is prone to be short-circuited, thereby greatly decreasing the cycling performance of the battery.

It can be learned from the test results of Examples 3 and 31 to 34 and Comparative Examples 15 and 16 that when the mass percentage of the additive in the electrolyte is 0.1% to 10%, lithium precipitation can be suppressed, helping improve the cycling performance of the battery. It can be learned from the test result of Comparative Example 15 that when the mass percentage of the additive in the electrolyte is excessively low, it is difficult to inhibit polymerization of the 1,3-dioxolane (DOL) by virtue of chemical activity of the additive, resulting in serious lithium precipitation of the battery, thereby decreasing the cycling performance of the battery. It can be learned from the test result of Comparative Example 16 that when the mass percentage of the additive in the electrolyte is excessively high, a large number of active lithium ions are consumed during cycling of the battery, which affects quality of the solid-state electrolyte membrane, resulting in serious capacity decay of the battery. Preferably, the mass percentage of the additive in the electrolyte is 0.5% to 5%.

It can be learned from the test results of Examples 3, 35 and 36 and Comparative Example 17 that lithium nitrate is decomposed at a low potential to form lithium nitride, and the inorganic protection layer formed in situ uniformly covers the surface of the lithium metal to stabilize the whole structure of the SEI (solid electrolyte interface film), thereby improving the cycling performance of the battery. Compared with lithium nitrate, fluoroethylene carbonate and lithium fluorosulfonate additives have a slight impact on stability of the electrolyte, but can also effectively improve the cycling performance of the battery. The foregoing additives are not added in Comparative Example 17, so that the side reactions on the surface of the electrode plate are increased, thereby decreasing the cycling performance of the battery.

Although this application is disclosed above with preferred embodiments, they are not intended to limit the claims. Any person skilled in the art can make several possible changes and modifications without departing from the concept of this application. Therefore, the protection scope of this application shall be subject to the scope defined by the claims of this application.

## Claims

1. A lithium metal negative electrode plate, comprising:
copper foil;
an active substance layer formed on at least part of a surface of the copper foil, wherein the active substance layer comprises a lithium metal alloy; and
a composite protection layer formed on at least part of a surface of the active substance layer, wherein thickness of the composite protection layer is less than or equal to 10 µm, and the composite protection layer comprises a lithium fluoride inorganic layer and a polymer organic layer.

2. The negative electrode plate according to claim 1, satisfying at least one of the following conditions:
(1) the thickness of the composite protection layer is 0.3 µm to 10 µm; and
(2) the thickness of the composite protection layer is 1 µm to 7 µm.

3. The negative electrode plate according to claim 1, satisfying at least one of the following conditions:
(3) a mass ratio of the lithium fluoride inorganic layer and the polymer organic layer is 1:10 to 10:1; and
(4) a mass ratio of the lithium fluoride inorganic layer and the polymer organic layer is 1:5 to 5:1.

4. The negative electrode plate according to claim 1 or 3, wherein the polymer organic layer comprises at least one of polydimethylsiloxane, polyacrylonitrile, polypyrrole, polyimide, polyacrylic acid, and polymethyl methacrylate.

5. The negative electrode plate according to claim 1 or 3, wherein the lithium fluoride inorganic layer is formed through in-situ reaction between polyvinylidene fluoride and the lithium metal alloy.

6. The negative electrode plate according to claim 5, satisfying at least one of the following conditions:
(5) a chemical formula of the lithium metal alloy is LiR, wherein metal R is selected from at least one of Ag, Mo, In, Ge, Bi, and Zn;
(6) a chemical formula of the lithium metal alloy is LiR, wherein a mass percentage of element R in the lithium metal alloy is 1% to 10%; and
(7) the lithium metal alloy is a solid solution alloy.

7. An electrochemical apparatus, comprising a positive electrode plate, a negative electrode plate, a separator, and an electrolyte, wherein the negative electrode plate is the negative electrode plate according to any one of claims 1 to 6.

8. The electrochemical apparatus according to claim 7, wherein the electrolyte comprises a solvent and a lithium salt, and satisfies at least one of the following conditions:
(9) the lithium salt comprises at least one of lithium hexafluorophosphate, lithium tetrafluoroborate, lithium difluorophosphate, lithium bis(trifluoromethanesulfonyl)imide, lithium bis(fluorosulfonyl)imide, lithium bis(oxalato)borate, or lithium difluoro(oxalato)borate;
(10) the solvent comprises ethylene glycol dimethyl ether and 1,3-dioxolane;
(11) the solvent comprises ethylene glycol dimethyl ether and 1,3-dioxolane, wherein a volume ratio of the dimethyl ether and the 1,3-dioxolane is (0.5-10): 1; and
(12) a concentration of the electrolyte is 0.5 mol/L to 7 mol/L.

9. The electrochemical apparatus according to claim 8, wherein the electrolyte satisfies at least one of the following conditions:
(13) the electrolyte further comprises an additive, wherein the additive comprises at least one of trioxymethylene, lithium nitrate, dioxane, lithium fluorosulfonate, and fluoroethylene carbonate; and
(14) the electrolyte further comprises an additive, wherein a mass percentage of the additive in the electrolyte is 0.1% to 10%.

10. An electronic device, comprising the electrochemical apparatus according to any one of claims 7 to 9.
